# EUROPÄISCHE PATENTSCHRIFT

(11) **EP 1 440 334 B1**
(45) Veröffentlichungstag und Bekanntmachung des Hinweises auf die Patenterteilung: **29.03.2006**
(21) Anmeldenummer: 02782878.9
(22) Anmeldetag: 10.10.2002
(51) Int. Cl.: G02B 1/00

(54) **VERFAHREN UND EINE VORRICHTUNG ZUM ZUSAMMENFÜHREN EINES ERSTEN UND ZWEITEN STRAHLENBÜNDELS**
METHOD AND A DEVICE FOR THE COMBINATION OF A FIRST AND SECOND BEAM OF RAYS
PROCEDE ET DISPOSITIF POUR CONCENTRER UN PREMIER ET UN SECOND FAISCEAU DE RAYONS

(30) Priorität: 12.10.2001 DE 10150577
(43) Veröffentlichungstag der Anmeldung: 28.07.2004
(73) Patentinhaber: Leica Microsystems CMS GmbH, 35578 Wetzlar (DE)
(72) Erfinder: KRÜGER, Ralf, 35510 Butzbach/Griedel (DE)
(74) Vertreter: Reichert, Werner Franz
(86) Internationale Anmeldenummer: PCT/EP2002/011337
(87) Internationale Veröffentlichungsnummer: WO 2003/034097

(56) Entgegenhaltungen:
- FR-A- 2 468 925
- US-A- 4 403 839
- US-A- 4 439 010
- US-B1- 6 459 490

## Beschreibung

Die Erfindung betrifft ein Verfahren und eine Vorrichtung zum Zusammenführen eines ersten und zweiten Strahlenbündels, insbesondere in einem optischen Instrument zur forensischen Vergleichsuntersuchung einer ersten und zweiten Probe, gemäß dem Oberbegriff von Anspruch 1 und 7.

Bei forensischen Untersuchungen ist es zur Aufklärung von Verbrechen oftmals erforderlich, das Bild einer ersten Probe, mit dem Bild einer zweiten Probe zu vergleichen, um nähere Informationen über den Hergang eines Verbrechens zu erhalten.

So werden z.B. die durch die Schlagbotzen einer Waffe erzeugten Abdrücke an Patronenhülsen miteinander verglichen, um festzustellen, ob bei zwei oder mehreren Verbrechen dieselbe Tatwaffe eingesetzt wurde.

Eine weitere bekannte Anwendung von optischen Vergleichsuntersuchungen besteht darin, die Echtheit von Dokumenten, insbesondere von Banknoten, zu kontrollieren, um herauszufinden, ob es sich um Fälschungen handelt.

Schließlich ist es zur Aufklärung von Verbrechen oftmals erforderlich, z. B. am Tatort aufgefundene Fasern von Kleidungsstücken mit den Fasern bekannter Kleidungsstücke zu vergleichen, um Rückschlüsse darüber zu erhalten, wie ein Täter bei einer Straftat bekleidet war.

Zur Durchführung der oben genannten forensischen Vergleichsuntersuchungen werden von der Anmelderin forensische Vergleichsmikroskope und Vergleichsmakroskope vertrieben, die aus zwei Einzelmikroskopen, bzw. Einzelmakroskopen bestehen, welche durch eine Brücke miteinander verbunden sind. In der Brücke ist eine Vorrichtung zum Zusammenführen der beiden durch die Einzelmikroskope/Makroskope erzeugten Einzelbilder enthalten, welche in der Regel als ein aus der Optik seit langem bekannter Strahlteiler ausgebildet ist. Der Strahlteiler führt die beiden miteinander zu vergleichenden Bilder der Einzelmikroskope/Makroskope in der Weise zusammen, dass sie durch einen an der Brücke angeordneten gemeinsamen Tubus hindurch vom Bediener des Vergleichsmikroskops/Makroskops als übereinanderliegend wahrgenommen werden, wobei durch ein jeweiliges Ausblenden von einander entsprechenden Teilbereichen der beiden Proben ein zusammengesetztes Bild entsteht, welches einen unmittelbaren Vergleich, z.B. der einen Probenhälfte mit der andern Probenhälfte, ermöglicht.

Strahlteiler, die sowohl zum Aufteilen, als auch zum Zusammenführen von Lichtstrahlen zum Einsatz gelangen, sind beispielsweise in "Bauelemente der Optik", Taschenbuch für Konstrukteure, 4. überarbeitete Auflage, H. Naumann/G. Schröder, Seiten 186 bis 188, bekannt.

Bei den bekannten Vergleichsmikroskopen/Makroskopen tritt dabei das Problem auf, dass die beiden miteinander zu vergleichenden Einzelbilder bedingt durch die Ausgestaltung der bekannten Strahlteiler im Tubus nicht farbneutral wahrgenommen werden, wodurch der Vergleich der beiden Proben erheblich erschwert und zudem die Zuverlässigkeit, mit der zwei Proben identifiziert werden können, aufgrund der fehlenden oder zumindest stark eingeschränkten Farbinformation unnötiger Weise herabgesetzt wird.

Die FR-A 2 468 925 beschreibt ein Mikroskop, mit dem zwei Objekte, die sich in unterschiedlichen Objektebenen befinden, in ein und dieselbe Bildebene abgebildet werden sollen. Das eine Objekt soll an die Position des anderen Objekts verschoben werden können, ohne dabei die Fokusposition zu verändern. Dazu ist das Objektiv entlang seiner optischen Achse verschiebbar. Der vom Objektiv kommende Abbildungsstrahlengang enthält je ein Strahlenbündel des ersten und des zweiten Objekts und wird auf eine Vorrichtung mit einer ersten und einer zweiten Teilerschicht geführt. Die Teilerschichten teilen das erste und das zweite Strahlenbündel durch Transmission und Reflexion jeweils in erste und zweite Teilstrahlen auf. Anschließend werden die erzeugten Teilstrahlen zu einem dritten auslaufenden Strahlenbündel überlagert. Die erzeugten Teilstrahlen werden nach der ersten Teilerschicht mit mehreren Spiegeln über zwei getrennte optische Wege geführt, von denen einer eine variable optische Weglänge hat, um die Bilder der beiden Objekte in dieselbe Ebene abzubilden. Die Frage nach der Farbneutralität im auslaufenden Strahlenbündel wird nicht diskutiert.

Die US-B1-6 459 490 beschreibt ein Mikroskop mit einem Objektiv und einer Beleuchtungseinrichtung, das eine Probe auf einen Detektor abbildet. Zwischen der Tubuslinse des Mikroskops und dem Detektor ist eine Strahlteiler-Vorrichtung mit zwei Teilerschichten und zwei Spiegeln angeordnet, welche das von der Probe kommende Strahlenbündel durch Transmission und Reflexion jeweils in erste und zweite Teilstrahlen aufteilt. Die erzeugten Teilstrahlen werden von der zweiten Teilerschicht von einander getrennt und lateral versetzt auf den Detektor abgebildet.

Dem gemäß ist es eine Aufgabe der vorliegenden Erfindung, ein Verfahren und eine Vorrichtung zu schaffen, mit denen sich bei der Überlagerung von zwei miteinander zu vergleichenden Einzelbildern, insbesondere in einem Vergleichsmikroskop oder Vergleichsmakroskop für forensische Untersuchungen, ein im Wesentlichen farbneutrales Mischbild erzeugen lässt.

Eine weitere Aufgabe der Erfindung besteht darin, ein optisches Instrument zur forensischen Vergleichsuntersuchung einer ersten und zweiten Probe zu schaffen, welches ein im Wesentlichen farbneutrales Mischbild der ersten und zweiten Probe erzeugt.

Diese Aufgabe wird erfindungsgemäß durch die Merkmale der Ansprüche 1 und 7 gelöst.

Weitere Merkmale der Erfindung sind in den Unteransprüchen enthalten.

Gemäß der Erfindung werden bei einem Verfahren zum Zusammenführen eines ersten und zweiten Strahlenbündels, insbesondere in einem optischen Instrument zur forensischen Untersuchung von Proben, die Strahlenbündel mit einer Teilerschicht in Wechselwirkung gebracht, wobei jedes der ersten und zweiten Strahlenbündel zum einen durch die Teilerschicht hindurchtritt, als auch an dieser reflektiert wird. Die durch die Transmission und Reflexion entstehenden ersten und zweiten Teilstrahlen des ersten und zweiten Strahlenbündels werden im Anschluss daran jeweils mit einer weiteren Teilerschicht in Wechselwirkung gebracht, in der Weise, dass die durch eine Reflexion und Transmission an der Teilerschicht und der weiteren Teilerschlcht entstandenen Teilstrahlen des ersten und zweiten Strahlenbündels ein weiteres Mal mit der weiteren Tellerschicht in Wechselwirkung treten, bevor sie zu einem auslaufenden dritten Strahlenbündel zusammengeführt werden.

Hierdurch ergibt sich z.B. beim ersten Strahlenbündel für den ersten Teilstrahl eine Reflexion und anschließend eine Transmission; und für den zweiten Teilstrahl zuerst eine Transmission und dann eine Reflexion. Für den ersten Teilstrahl des zweiten Strahlenbündels ergibt sich hingegen zuerst eine Reflexion und dann eine weitere Reflexion; und für den zweiten Teilstrahl eine Transmission und im Anschluss daran eine weitere Transmission an der Teilerschicht, bzw. weiteren Teilerschicht. Dem gemäß ist im auslaufen den dritten Strahlenbündel die Summe der Reflexionen und Transmissionen der Teilstrahlen des ersten Strahlenbündels mit einer Gesamtzahl von jeweils 2 gleich der Summe der Reflexionen und Transmissionen der Teilstrahlen des zweiten Strahlenbündel.

Durch diese erfindungsgemäße nacheinander erfolgende zweifache Wechselwirkung der ersten und zweiten Strahlenbündel mit der Teilerschicht sowie der weiteren Teilerschicht vor deren Vereinigung zum dritten auslaufenden Strahlenbündel, ist die Anzahl, bzw. die Summe der erfolgten Reflexionen und Transmissionen der ersten und zweiten Teilstrahlen des ersten Strahlenbündels im auslaufenden dritten Strahlenbündel im Wesentlichen gleich der Anzahl der erfolgten Reflexionen und Transmissionen der ersten und zweiten Teilstrahlen im zweiten einlaufenden Strahlenbündel.

Durch das erfindungsgemäße Verfahren ergibt sich der Vorteil, dass Farbfehler, die bei den Strahlteilern des Standes der Technik mit nur einer Teilerschicht, z.B. in Form einer Interferenzschicht oder im einfachsten Falle eines halbdurchlässigen Spiegels, durch Unterschiede in den Transmissions- und Reflexionskoeffizienten der Teilerschichten sowie eine physikalisch bedingte Wellenlängenabhängigkeit derselben hervorgerufen werden, nahezu nicht mehr auftreten.

Gemäß einer bevorzugten Ausführungsform der Erfindung weist die Teilerschicht einander gegenüberliegende und im Wesentlichen parallel zueinander verlaufende erste und zweite Reflexionsflächen auf, wobei das erste Strahlenbündel an einem ersten Wechselwirkungspunkt auf die erste Reflexionsfläche und das zweite Strahlenbündel an einem zweiten Wechselwirkungspunkt auf die zweite Reflexionsfläche auftrifft.

Die Teilerschicht ist vorzugsweise eine aus dem Stand der Technik in bekannter Weise gefertigte Teilerschicht, die z.B. aus mehreren metallischen und dielektrischen Schichten besteht. Der Grundkörper besteht beispielsweise aus BAK 4® (eine Glassorte der Fa. Schott), auf den die ersten und zweiten Reflexionsflächen in Form von einer metallischen Silberschicht, z.B. durch Bedampfen, aufgebracht sind. Die Teilerschicht kann jedoch in gleicher Weise eine beliebige aus dem Stand der Technik bekannte Teilerschicht sein.

Um eine möglichst symmetrische Anordnung mit geringst möglichen Abbildungsfehlern zu erhalten, liegen der erste Wechselwirkungspunkt und der zweite Wechselwirkungspunkt im Wesentlichen an derselben Position auf einander gegenüberliegenden Seiten der Teilerschicht.

In gleicher Weise wie die Teilerschicht, weist die weitere Teilerschicht ebenfalls einander gegenüberliegende und im Wesentlichen parallel zueinander verlaufende erste und zweite Reflexionsflächen auf. Die Anordnung der weiteren Teilerschicht ist dabei vorzugsweise derart, dass die durch Reflexion entstandenen ersten Teilstrahlen des ersten Strahlenbündels an einem dritten Wechselwirkungspunkt auf die erste Reflexionsfläche und die zweiten, durch Reflexion entstandenen Teilstrahlen des zweiten Strahlenbündels, an einem vierten Wechselwirkungspunkt auf die zweite Reflexionsfläche der weiteren Teilerschicht auftreffen, wobei zur Minimierung von Abbildungsfehlem der dritte Wechselwirkungspunkt und der vierte Wechselwirkungspunkt im Wesentlichen an derselben Position auf einander gegenüberliegenden Seiten der weiteren Teilerschicht liegen.

Bei der bevorzugten Ausführungsform der Erfindung werden die ersten durch Reflexion an der Teilerschicht entstandenen Teilstrahlen des ersten Strahlenbündels und die zweiten, durch eine Transmission an der Teilerschicht entstandenen Teilstrahlen des zweiten Strahlenbündels nach der Wechselwirkung mit der Teiterschicht durch Totalreflexion an einer dritten Reflexionsfläche in Richtung des dritten Wechselwirkungspunktes umgelenkt.

In vorzugsweise gleicher Weise werden die zweiten durch Transmission entstandenen Teilstrahlen des ersten Strahlenbündels und die ersten, durch Reflexion entstandenen Teilstrahlen des zweiten Strahlenbündels nach der Wechselwirkung mit der Teilerschicht ebenfalls durch Totalreflexion an einer vierten Reflexionsfläche in Richtung des vierten Wechselwirkungspunktes umgelenkt. Die dritte und vierte Reflexionsfläche werden dabei vorzugsweise durch die verspiegelten Randflächen eines Prismas gebildet, die parallel zur Teilerschicht, bzw. zur weiteren Teilerschicht verlaufen. Hierdurch ergibt sich eine Reflexion der Teilstrahlen, die - im Vergleich zu einer ebenfalls denkbaren Reflexion der Teilstrahlen an einer bedampften Spiegelfläche - im Wesentlichen farbneutral ist. Der Winkel, unter welchem die zuvor genannten Teilstrahlen auf die dritte und vierte Reflexionsfläche, und vorzugsweise auch auf die weitere Teilerschicht treffen, liegt in gleicher Weise wie der Einfallswinkel der ersten und zweiten einfallenden Strahlenbündel bezüglich der Teilerschicht vorzugsweise im Bereich von 45 °. Hierdurch wird ein mit einfachen Mitteln zu realisierender Strahlengang erhalten, der eine Abbildung mit einer sehr hohen Farbneutralität ermöglicht.

Bei der bevorzugten Ausführungsform der Erfindung sind sowohl das Reflexionsvermögen, als auch das Transmissionsvermögen der Teilerschicht und der weiteren Teilerschicht im Wesentlichen gleich, wodurch sich eine in hohem Maße farbneutrale Zusammenführung der Strahlenbündel ergibt. Hierbei ist es insbesondere von Vorteil, wenn die Teilerschicht und die weitere Teilerschicht durch ein und dieselbe Teilerschicht gebildet werden, so dass die einlaufenden ersten und zweiten Strahlenbündel, sowie die aus diesen nach der erstmaligen Wechselwirkung mit der Teilerschicht durch Transmission und Reflexion entstehenden Teilstrahlen nochmals mit der selben Teilerschicht in Wechselwirkung treten, und durch diese am vierten Wechselwirkungspunkt zum dritten auslaufenden Strahlenbündel zusammengeführt werden. Hierdurch kann sichergestellt werden, dass das Reflexionsvermögen und Transmissionsvermögen der Teilerschichten für die einlaufenden Strahlenbündel sowie für die Teilstrahlenbündel in hohem Maße gleich sind, und somit die Farbneutralität nicht durch fertigungstechnische Toleranzen reduziert wird.

Beträgt für eine bestimmte Wellenlänge bei einer Teilerschicht mit einem Teilerverhältnis von 50/50 das Transmissionsvermögen fertigungsbedingt z.B. 45% und das Reflexionsvermögen 55%, so verringert sich durch das erfindungsgemäße Verfahren die Farbaufspaltung von 45/55 beim Stand der Technik auf 49,5/50,5.

Dies ist darauf zurückzuführen, dass beim ersten einlaufenden Strahlenbündel der im auslaufenden dritten Strahlenbündel enthaltene reflektierte und transmittierte Anteil 55%*45% + 45%*55% = 49,5 % beträgt; der im auslaufenden dritten Strahlenbündel enthaltene reflektierte und transmittierte Anteil des zweiten einlaufenden Strahlenbündels hingegen einen Wert von 55%*55% + 45%*45% = 50,5% aufweist. Demgemäss kann durch den Einsatz des erfindungsgemäßen Verfahrens die Farbaufspaltung zwischen dem ersten und zweiten einlaufenden Strahlenbündel im zusammengeführten auslaufenden dritten Strahlenbündel im Vergleich zu einem Strahlteiler mit einer einzelnen Teilerschicht nach dem Stand der Technik um einen Faktor 10 verbessert werden.

Wenn bei dem zuvor beschriebenen Verfahren und bei der nachfolgend beschriebenen Vorrichtung zur Durchführung des Verfahrens von einem Zusammenführen zweier Strahlenbündel zu einem dritten auslaufenden Strahlenbündel die Rede ist, so schließt dies in gleicher Weise auch den umgekehrten Strahlengang mit ein, bei welchem ein einlaufendes drittes Strahlenbündel in zwei auslaufende erste und zweite Strahlenbündel aufgespalten wird. Eine solche Aufteilung eines Strahlenbündels in zwei weitere Strahlenbündel wird z.B. in Mikroskopen dazu verwendet, ein Teilbild des visuell im Okular sichtbaren Objekts zu Dokumentationszwecken einem digitalen Bildaufnahmesystem zuzuführen. Auch bei diesen Verfahren und Vorrichtungen zum Aufteilen eines einlaufenden Strahlenbündels oder Bildes in zwei auslaufende Strahlenbündel (Strahlteiler) ergeben sich die der Erfindung zugrunde liegenden Vorteile, insbesondere ein hohe Farbneutralität.

In weiterer Ausgestaltung des der Erfindung zugrundeliegenden Gedankens umfasst eine Vorrichtung zum Zusammenführen eines ersten und zweiten Strahlenbündels oder Bildes eine Teilerschicht, mit der das erste und zweite Strahlenbündel unter Bildung von ersten und zweiten Teilstrahlen in Wechselwirkung treten, die zu einem dritten auslaufenden Strahlenbündel überlagert werden. In Ergänzung hierzu ist eine weitere Teilerschicht vorgesehen, mit der die ersten und zweiten Teilstrahlen des ersten und zweiten Strahlenbündels nach ihrer Wechselwirkung mit der (ersten) Teilerschicht in der Weise ein weiteres Mal in Wechselwirkung treten, dass im auslaufenden dritten Strahlenbündel die Anzahl der erfolgten Reflexionen und Transmissionen der ersten und zweiten Teilstrahlen des ersten und zweiten Strahlenbündels im Wesentlichen gleich sind.

Die Teilerschicht und die weitere Teilerschicht sind vorzugsweise in der zuvor im Zusammenhang mit dem erfindungsgemäßen Verfahren beschriebenen Weise ausgestaltet und weisen einander gegenüberliegende und im Wesentlichen parallel zueinander verlaufende erste und zweite Reflexionsflächen auf, wobei das erste Strahlenbündel an einem ersten Wechselwirkungspunkt auf die erste Reflexionsfläche und das zweite Strahlenbündel an einem zweiten Wechselwirkungspunkt auf die zweite Reflexionsfläche auftrifft.

In gleicher Weise besitzt die weitere Teilerschicht einander gegenüberliegende und im Wesentlichen parallel zueinander verlaufende erste und zweite Reflexionsflächen, auf die die ersten, durch Reflexion entstandenen Teilstrahlen des ersten Strahlenbündels an einem dritten Wechselwirkungspunkt und die zweiten, durch Reflexion entstandenen Teilstrahlen des zweiten Strahlenbündels an einem vierten Wechselwirkungspunkt auf einander gegenüberliegenden Seiten auftreffen.

Die durch Reflexion an der Teilerschicht entstandenen ersten Teilstrahlen des ersten Strahlenbündels und die zweiten, durch eine Transmission durch die Teilerschicht entstandenen Teilstrahlen des zweiten Strahlenbündels werden gemäß einer besonderes vorteilhaften Ausführungsform der Erfindung nach der Wechselwirkung mit der Teilerschicht durch Totalreflexion an einer dritten Reflexionsfläche in Richtung des dritten Wechselwirkungspunktes umgelenkt.

In gleicher Weise werden die durch Transmission an der ersten Teilerschicht entstandenen zweiten Teilstrahlen des ersten Strahlenbündels und die ersten, durch Reflexion entstandenen Teilstrahlen des zweiten Strahlenbündels nach ihrer Wechselwirkung mit der Teilerschicht durch Totalreflexion an einer vierten Reflexionsfläche in Richtung des vierten Wechselwirkungspunktes umgelenkt. Durch die Umlenkung der Teilstrahlen durch Totalreflexion an der dritten und vierten Reflexionsfläche ergibt sich ein kompakter und kostengünstig zu fertigender Strahlteiler, der sowohl zum Zusammenführen zweier Strahlenbündel, als auch zum Aufteilen eines einlaufenden Strahlenbündels in zwei auslaufende Strahlenbündel mit hoher Farbneutralität einsetzbar ist.

Gemäß einer bevorzugten Ausführungsform der Erfindung werden die Teilerschicht und die weitere Teilerschicht durch eine einzige durchgehende Teilerschicht gebildet. Die erfindungsgemäße Vorrichtung besteht hierbei vorzugsweise aus zwei Teilprismen mit trapezförmigen Grundflächen und vorzugsweise im rechten Winkel dazu verlaufende Seitenflächen, die im Bereich der langen Seitenfläche vorzugsweise mit Hilfe von optischem Kitt zusammengefügt werden. Die Teilerschicht und die weitere Teilerschicht werden dabei auf die lange Seitenfläche eines der Teilprismen aufgebracht, z.B. durch Aufdampfen oder ebenfalls mit Hilfe von optischem Kitt, bevor die beiden Teilprismen zusammengefügt werden, so dass die in diesem Falle durchgehende Teilerschicht im Bereich der Stoßstelle der beiden Teilprismen angeordnet ist. Die Teilprismen bestehen dabei vorzugsweise aus Glas, können jedoch auch aus Kunststoff oder einem anderen geeigneten Material gefertigt sein.

Bei dieser Ausführungsform der Erfindung werden die dritte und vierte Reflexionsfläche durch die einer jeden langen Seitenfläche eines Teilprismas gegenüberliegende und zu dieser parallele kurze Seitenfläche gebildet. Die übrigen beiden Seitenflächen sind zu den zuvor genannten beiden Seitenflächen vorzugsweise in einem Winkel von 45 ° angeordnet. Von diesen im 45° Winkel angeordneten Seitenflächen dienen eine erste und zweite Seitenfläche als Einfallsflächen für das erste und zweite einlaufende Strahlenbündel, und eine dritte Seitenfläche bildet eine Austrittsfläche für das dritte auslaufende Strahlenbündel.

Die verbleibende vierte winkelig angeordnete Seitenfläche der Teilprismen kann gemäß einer weiteren Ausführungsform als Austrittfläche für ein weiteres auslaufendes Strahlenbündel dienen, welches z.B. im Falle von Vergleichsmikroskopen oder Vergleichsmakroskopen über ein geeignetes Abbildungssystem im einfachsten Falle einem Fotoapparat, vorzugsweise jedoch einem digitalen Aufzeichnungs- und Weiterverarbeitungssystem zu Dokumentationszwecken zugeführt wird.

Hierdurch ergibt sich der Vorteil, dass die erfindungsgemäße Vorrichtung ohne den Einsatz eines zusätzlichen weiteren Strahlteilers die Möglichkeit bietet, ein weiteres zusammengesetztes im Wesentlichen farbneutrales Bild für Dokumentationszwecke aus dem Strahlengang auszukoppeln.

In weiterer Ausgestaltung des der Erfindung zugrunde liegenden Gedankens wird die zuvor beschriebene Vorrichtung in einem optischen Instrument zur forensischen Vergleichsuntersuchung einer ersten und zweiten Probe eingesetzt, in welchem der erfindungsgemäßen Vorrichtung ein erstes Bild der ersten Probe in Form eines ersten Strahlenbündels über eine erste Abbildungsoptik und ein zweites Bild der zweiten Probe in Form eines zweiten Strahlenbündels über eine zweite Abbildungsoptik zur gemeinsamen Darstellung zugeführt werden.

Gemäß der bevorzugten Ausführungsform der Erfindung werden die erste Abbildungsoptik und die zweite Abbildungsoptik hierbei durch ein erstes und zweites Mikroskop gebildet, und die Vorrichtung zum Zusammenführen der beiden Bilder ist in einer die Mikroskope verbindenden Brücke aufgenommen.

Bei dieser Ausführungsform der Erfindung kann es weiterhin von Vorteil sein, wenn an der Brücke ein mit dieser verbundener gemeinsamer Tubus angeordnet ist, durch welchen hindurch das zusammengeführte erste und zweite Bild in Form eines dritten auslaufenden Strahlenbündels betrachtet werden können.

Schließlich kann das optische Instrument ein weiteres Abbildungssystem enthalten, mittels welchem aus der erfindungsgemäßen Vorrichtung zum Zusammenführen des ersten und zweiten Bildes ein weiteres Bild in Form eines vierten Strahlenbündels zu Dokumentationszwecken auskoppelbar ist, welches aus dem zusammengeführten ersten und zweiten Bild zusammengesetzt ist.

Die Erfindung wird nachfolgend mit Bezug auf die Zeichnungen anhand von Beispielen beschrieben.

In den Zeichnungen zeigen:
- Fig. 1: ein erfindungsgemäßes optisches Instrument in Form eines Vergleichsmikroskops mit einer schematisch dargestellten erfindungsgemäßen Vorrichtung zum Zusammenführen zweier Bilder oder Strahlenbündel zur forensischen Vergleichsuntersuchung einer ersten und zweiten Probe; und
- Fig. 2: eine schematische Detailansicht der erfindungsgemäßen Vorrichtung zum Zusammenführen eines ersten und zweiten Strahlenbündels zu einem dritten Strahlenbündel, bzw. zum Aufspalten eines dritten einlaufenden Strahlenbündels in ein erstes und zweites auslaufendes Strahlenbündel bei umgekehrtem Strahlengang.

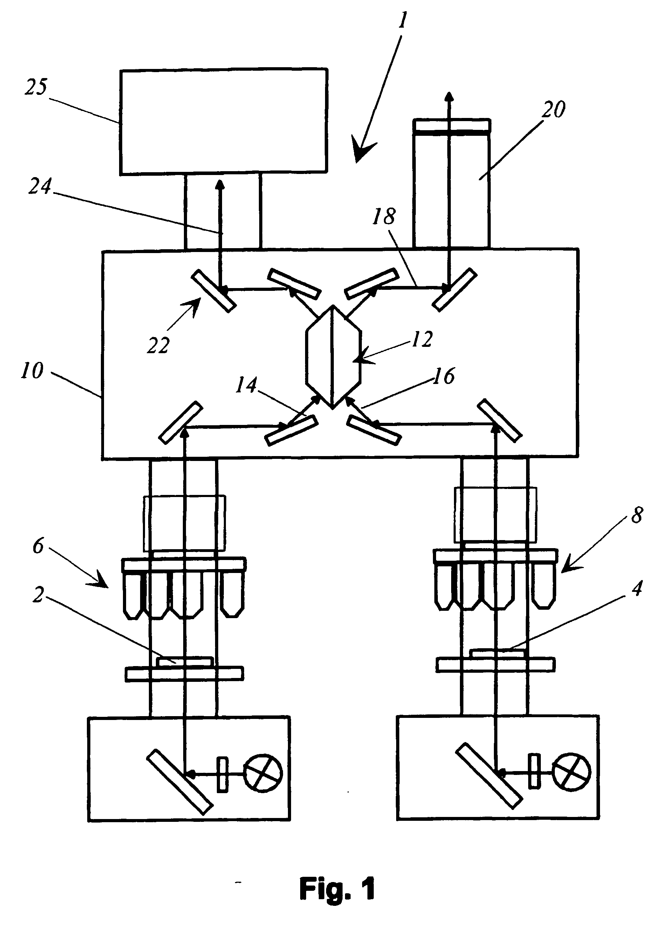

Wie in Fig. 1 gezeigt ist, umfasst ein erfindungsgemäßes optisches Instrument 1 zur forensischen Vergleichsuntersuchung einer ersten Probe 2 und zweiten Probe 4 eine erste Abbildungsoptik in Form eines ersten Mikroskops 6, sowie eine zweite Abbildungsoptik in Form eines zweiten Mikroskops 8, die durch eine Brücke 10 miteinander verbunden sind, in welcher eine auch als Strahlteiler bezeichnete erfindungsgemäße Vorrichtung 12 aufgenommen ist, welche ein erstes Bild der ersten Probe 2 und ein mit diesem zu vergleichendes Bild der zweiten Probe 4 in Form eines ersten und zweiten einlaufenden Strahlenbündels 14, 16 zusammenführt und dieses zusammengeführte Bild in Form eines dritten Strahlenbündels 18 in einem an der Brücke 10 angeordneten Tubus 20 zur gemeinsamen Darstellung abbildet.

Wie in Fig. 1 weiterhin gezeigt ist, umfasst das erfindungsgemäße optische Instrument 1 ferner ein schematisch dargestelltes weiteres optisches Abbildungssystem 22 aus nicht näher bezeichneten Umlenkspiegeln, über welches aus der Vorrichtung 12 zum Zusammenführen des ersten und zweiten Bildes ein weiteres aus dem zusammengeführten ersten und zweiten Bild zusammengesetztes Bild in Form eines vierten Strahlenbündels 24 zu Dokumentationszwecken durch eine Kamera 25 auskoppelbar ist, wobei die Umlenkspiegel aus darstellungstechnischen Gründen nur schematisch eingezeichnet sind.

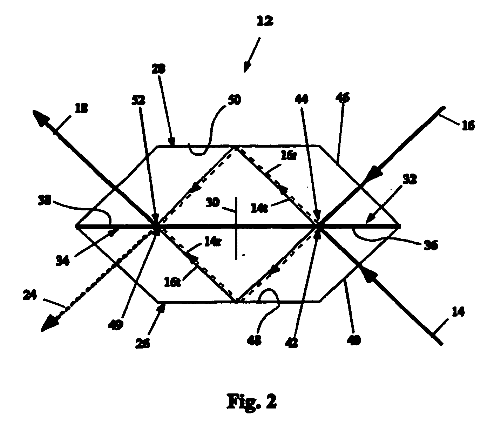

In Fig. 2 ist die erfindungsgemäße Vorrichtung 12 zum Zusammenführen des ersten Strahlenbündels 14 und des zweiten Strahlenbündels 18 im Detail dargestellt.

Wie der Figur 2 zu entnehmen ist, umfasst die erfindungsgemäße Vorrichtung 12 zum Zusammenführen des ersten und zweiten Strahlenbündels 14, 16 ein erstes und ein zweites Teilprisma 26 und 28, zwischen denen eine optische Teilerschicht mit einer ersten Reflexionsfläche 36 und einer zweiten Reflexionsfläche 38 angeordnet ist, die zum besseren Verständnis durch die gedachte Trennlinie 30 in eine Teilerschicht 32 und eine weitere Teilerschicht 34 unterteilt wird.

Nachdem das erste einlaufende Strahlenbündel 14 durch die im Wesentlichen ebene Eintrittsfläche 40 hindurch in das erste Teilprisma 26 eingetreten ist, trifft es an einem ersten Wechselwirkungspunkt 42 auf die erste Reflexionsfläche 36 der Teilerschicht 32, an welchem das erste Strahlenbündel 14 in an der ersten Reflexionsfläche 36 durch Reflexion entstandene erste Teilstrahlen 14r sowie durch die Teilerschicht 32 hindurchtretende, durch Transmission entstandene zweite Teilstrahlen 14t aufgespalten wird.

In ähnlicher Weise wird das durch die im Wesentlichen ebene Eintrittsfläche 46 hindurch in das zweite Teilprisma 28 eintretende zweite einlaufende Strahlenbündel 16 an einem zweiten Wechselwirkungspunkt 44 an der zweiten Reflexionsfläche 38 der Teilerschicht 32 in erste durch Reflexion entstandene Teilstrahlen 16r sowie in zweite, durch eine Transmission durch die Teilerschicht 32 hindurch entstandene zweite Teilstrahlen 16t aufgespalten.

Die ersten durch Reflexion entstandenen Teilstrahlen 14r des ersten Strahlenbündels 14 und die zweiten, durch Transmission entstandenen Teilstrahlen 16t des zweiten Strahlenbündels 16 werden nach der Wechselwirkung mit der Teilerschicht 32 vorzugsweise durch Totalreflexion an einer dritten Reflexionsfläche 48 in Richtung eines dritten Wechselwirkungspunktes 49 umgelenkt, an welchem sie gemeinsam auf die erste Reflexionsfläche 36 der weiteren Teilerschicht 34 auftreffen, durch welche sie zu einem Teil hindurchtreten und zu einem anderen Teil reflektiert werden. Der an dem dritten Wechselwirkungspunkt 49 reflektierte Anteil der beiden Teilstrahlen bildet hierbei einen Teil des vierten auslaufenden Strahlenbündels 24, welches zu Dokumentationszwecken einer Kamera 25 werden kann (Fig. 1).

In gleicher Weise werden die zweiten, durch Transmission entstandenen Teilstrahlen 14t des ersten Strahlenbündels 14 und die ersten, durch Reflexion entstandenen Teilstrahlen 16r des zweiten Strahlenbündels 16 nach ihrer Wechselwirkung mit der Teilerschicht 32 durch Totalreflexion an einer vierten Reflexionsfläche 50 in Richtung eines vierten Wechselwirkungspunktes 52 umgelenkt, an welchem sie gemeinsam auf die zweite Reflexionsfläche 38 der weiteren Teilerschicht 34 auftreffen, durch welche sie zu einem Teil hindurchtreten und zu einem anderen Teil reflektiert werden. Der an dem vierten Wechselwirkungspunkt 52 reflektierte Anteil der beiden Teilstrahlen 16r und 14t überlagert sich hierbei mit dem durch die weitere Teilerschicht 34 im Bereich des dritten Wechselwirkungspunktes 49 hindurchgetretenen Anteil der Teilstrahlen 14r und 16t zum auslaufenden dritten Strahlenbündel 18, welches gemäß der Darstellung von Fig. 1 dem Tubus 20 zugeführt wird.

Schließlich überlagert sich der an dem vierten Wechselwirkungspunkt 52 durch die weiteres Teilerschicht 34 hindurchgetretene Anteil der beiden Teilstrahlen 16r und 14t mit dem im Bereich des dritten Wechselwirkungspunkts 49 reflektierten Anteil der Teilstrahlen 14r und 16t zum vierten auslaufenden Strahlenbündel 24.

### Bezugszeichenliste

- 1: erfindungsgemäßes optisches Instrument
- 2: erste Probe
- 4: zweite Probe
- 6: erstes Mikroskop
- 8: zweites Mikroskop
- 10: Brücke
- 12: erfindungsgemäße Vorrichtung zum Zusammenführen zweier Strahlenbündel/Strahlteiler
- 14: erstes einlaufendes Strahlenbündel
- 14r: durch Reflexion aus dem ersten Strahlenbündel entstandene erste Teilstrahlen
- 14t: durch Transmission aus dem ersten Strahlenbündel entstandene zweite Teilstrahlen
- 16: zweites einlaufendes Strahlenbündel
- 16r: durch Reflexion aus dem zweiten Strahlenbündel entstandene erste Teilstrahlen
- 16t: durch Transmission aus dem zweiten Strahlenbündel entstandene zweite Teilstrahlen
- 18: drittes auslaufendes Strahlenbündel
- 20: Tubus
- 22: weiteres optisches Abbildungssystem
- 24: viertes Strahlenbündel
- 25: Kamera
- 26: erstes Teilprisma
- 28: zweites Teilprisma
- 30: gedankliche Trennlinie
- 32: Teilerschicht
- 34: weitere Teilerschicht
- 36: erste Reflexionsfläche
- 38: zweite Reflexionsfläche
- 40: Eintrittsfläche für erstes Strahlenbündel
- 42: erster Wechselwirkungspunkt
- 44: zweiter Wechselwirkungspunkt
- 46: Eintrittsfläche für zweites Strahlenbündel
- 48: dritte Reflexionsfläche
- 49: dritter Wechselwirkungspunkt
- 50: vierte Reflexionsfläche
- 52: vierter Wechselwirkungspunkt

## Patentansprüche

1. Verfahren zum Zusammenführen eines ersten und zweiten Strahlenbündels (14, 16), insbesondere in einem optischen Instrument zur forensischen Untersuchung von Präparaten, wobei das erste und das zweite Strahlenbündel (14, 16) durch Reflexion und Transmission an einer ersten (32) Teiterschicht in Jeweils erste und zweite. Teilstrahlen (14r, 14t, 16r, 16t) aufgeteilt werden, und wobei die entstandenen Teilstrahlen an einer zweiten Teilerschicht (34) zu einem dritten auslaufenden Strahlenbrindel (18) überlagert werden,
**dadurch gekennzeichnet**,
vor der Vereinigung zu dem auslaufenden dritten Strahlenbündel (18)
- **dass** die Anzahl derlan den beiden Tellerschichten (32, 34) erfolgten Reflexionen und Transmissionen der Teilstrahlen (14r, 14t) des ersten Strahlenbündels (14), gleich des buzahl der erfolglen Reflexionen und Transmission des Tulstrahlen (16r, 16t) des zweiten Strahlenbündels (16) ist
- **dass** alle weiteren, nicht an einer der Teilerschlchten (32, 34) stattfindenden Reflexionen durch Totalreflexion und daher farbneutral erzeugt werden,
- **dass** die erste Teilerschicht (32) einander gegenüberliegende und im Wesentlichen parallel zueinander verlaufende erste und zweite Reflexionsflächen (36, 38) aufweist, und dass das erste Strahlenbündel (14) an einem ersten Wechselwirkungspunkt (42) auf die erste Reflexionsfläche (36) und das zweite Strahlenbündel (16) an einem zweiten Wechselwirkungspunkt (44) auf die zweite Reflexionsfläche (38) auftrifft,
- **dass** der erste Wechselwirkungspunkt (42) und der zweite Wechselwirkungspunkt (44) im Wesentlichen an derselben Position auf einander gegenüberliegenden Seiten der ersten Teilerschicht (32) liegen,
- die zweite Teilerschicht (34) einander gegenüberliegende und im Wesentlichen parallel zueinander verlaufende erste und zweite Reflexionsflächen aufweist, und dass die ersten durch Reflexion an der ersten Teilerschicht entstandenen Teilstrahlen des ersten Strahlenbündels an einem dritten Wechselwirkungspunkt auf die erste Reflexionsfläche und die zweiten, durch Reflexion an der ersten Teilerschicht entstandenen Teilstrahlen des zweiten Strahlenbündels an einem vierten Wechselwirkungspunkt auf die zweite Reflexionsfläche der zweiten Teilerschicht auftreffen,
- und **dass** der dritte Wechselwirkungspunkt und der vierte Wechselwirkungspunkt im Wesentlichen an derselben Position auf einander gegenüberliegenden Seiten der zweiten Teilerschicht liegen.

2. Verfahren nach Anspruch 1,
**dadurch gekennzeichnet, dass**
das erste Strahlenbündel auf der Vorderseite der ersten Tellerschicht und das zweite Strahlenbündel auf der Rückseite der ersten Teilerschicht auftrifft.

3. Verfahren nach einem der Ansprüche 1 oder 2,
**dadurch gekennzeichnet, dass**
die ersten, durch Reflexion an der ersten Teilerschicht entstandenen Teilstrahlen des ersten Strahlenbündels und die zweiten, durch eine Transmission an der ersten Teilerschicht entstandenen Teilstrahlen des zweiten Strahlenbündels nach der Wechselwirkung mit der ersten Teilerschicht durch Totalreflexion an einer dritten Reflexionsfläche in Richtung des dritten Wechselwirkungspunktes umgelenkt werden.

4. Verfahren nach einem der Ansprüche 1 oder 2,
**dadurch gekennzeichnet, dass**
die zweiten durch Transmission an der ersten Teilerschicht entstandenen Teilstrahlen des ersten Strahlenbündels und die ersten, durch Reflexion an der ersten Teilerschtcht entstandenen Teilstrahlen des zweiten Strahlenbündels nach der Wechselwirkung mit der ersten Teilerschicht durch Totalreflexion an einer vierten Reflexionsfläche in Richtung des vierten Wechselwirkungspunktes umgelenkt werden.

5. Verfahren nach einem der vorhergehenden Ansprüche,
**dadurch gekennzeichnet, dass** das Reflexionsvermögen und Transmissionsvermögen der ersten Teilerschicht und der zweiten Teilerschicht zwischen 45% und 55% liegt.

6. Verfahren nach Anspruch 1,
**dadurch gekennzeichnet, dass**
die erste Teilerschicht und die zweite Teilerschicht durch eine einzige, durchgehende Teilerschicht gebildet werden.

7. Vorrichtung (12) mit der ein erstes Bild (14) einer ersten Probe (2) über eine erste Abbildungsoptik (6) und ein zweites Bild (16) einer zweiten Probe (4) über eine zweite Abbildungsoptik (8) aufgenommen und in einer gemeinsamen Darstellung (18) überlagerbar ist,
wobei von der ersten Probe (2) ein erstes Strahlenbündel (14) und von der zweiten Probe (4) ein zweites Strahlenbündel (16) ausgeht, mit einer ersten Teilerschicht (32) und einer zweiten Teilerschicht (34), die beide das erste und das zweite Strahlenbündel (14, 16) durch Transmission und Reflexion jeweils in erste und zweite Teilstrahlen (14r, 14t, 16r, 16t) aufteilen, und welche die erzeugten Teilstrahlen zu einem dritten auslaufenden Strahlenbündel (18) überlagert,
**dadurch gekennzeichnet,**
- **dass** vor der Vereinigung zu dem auslaufenden dritten Strahlenbündel (18) die Anzahl der an den beiden Teilerschichten (32, 34) erfolgten Reflexionen und Transmissionen der Teilstrahlen (14r, 14t) des ersten Strahlenbündel (14) gleich der Anzahl der erfolgten Reflexionen und Transmissionen der Teilstrahlen (16r, 16t) des zweiten Strahlenbündels (16) ist,
- **dass** alle weiteren Reflexionsflächen, die nicht Bestandteil der ersten Teilerschicht (32) oder der zweiten Tellerschicht (34) sind, als totalreflektierende Flächen ausgebildet sind,
- **dass** die erste Teilerschicht (32) einander gegenüberliegende und Im Wesentlichen parallel zueinander verlaufende erste und zweite Reflexionsflächen (36, 38) aufweist, und dass das erste Strahlenbündel (14) an einem ersten Wechselwirkungspunkt (42) auf die erste Reflexionsfläche (36) und das zweite Strahlenbündel an einem zweiten Wechselwirkungspunkt (44) auf die zweite Reflexionsfläche (38) auftrifft,
- **dass** der erste Wechselwirkungspunkt (42) und der zweite Wechselwirkungspunkt (44) im Wesentlichen an derselben Position auf einander gegenüberliegenden Seiten der ersten Teilerschicht (32) liegen,
- **dass** die zweite Teilerschicht (34) einander gegenüberliegende und im Wesentlichen parallel zueinander verlaufende erste und zweite Reflexionsflächen aufweist, und dass die ersten durch Reflexion an der ersten Teilerschicht entstandenen Teilstrahlen des ersten Strahlenbündels an einem dritten Wechselwirkungspunkt auf die erste Reflexionsfläche und die zweiten, durch Reflexion an der ersten Teilerschicht entstandenen Teilstrahlen des zweiten Strahlenbündels an einem vierten Wechselwirkungspunkt auf die zweite Reflexionsfläche der zweiten Teilerschicht auftreffen,
- und **dass** der dritte Wechselwirkungspunkt und der vierte Wechselwirkungspunkt im Wesentlichen an derselben Position auf einander gegenüberliegenden Seiten der zweiten Teilerschicht liegen.

8. Vorrichtung nach Anspruch 7,
**dadurch gekennzeichnet,dass**
die zweite Teilerschicht (34) einander gegenüberliegende und im Wesentlichen parallel zueinander verlaufende erste und zweite Reflexionsflächen (36, 38) aufweist, und dass die ersten durch Reflexion an der ersten Teilerschicht entstandenen Teilstrahlen (14r) des ersten Strahlenbündels (14) an einem dritten Wechselwirkungspunkt (49) auf die erste Reflexionsfläche (36) und die zweiten, durch Reflexion an der ersten Teilerschicht entstandenen Teilstrahlen (16r) des zweiten Strahlenbündels (16) an einem vierten Wechselwirkungspunkt (52) auf die zweite Reflexionsfläche (38) der zweiten Teilerschicht (34) auftreffen.

9. Vorrichtung nach Anspruch 8,
**dadurch gekennzeichnet, dass** eine totalreflektierende Fläche vorgesehen ist, welche die ersten durch Reflexion an der ersten Tellerschicht entstandenen Teilstrahlen (14r) des ersten Strahlenbündels (14) und die zweiten, durch eine Transmission an der ersten Teilerschicht entstandenen Teilstrahlen (16t) des zweiten Strahlenbündels (16) nach der Wechselwirkung mit der ersten Teilerschicht (32) durch Totalreflexion zu einer dritten Reflexionsfläche (48) in Richtung des dritten Wechselwirkungspunktes (49) umlenkt.

10. Vorrichtung nach einem der Ansprüche 7 oder 8,
**dadurch gekennzeichnet, dass** eine totalreflektierende Grenzfläche vorgesehen ist, welche die zweiten durch Transmission an der ersten Teilerschicht entstandenen Teilstrahlen (14t) des ersten Strahlenbündels (14) und die ersten, durch Reflexion entstandenen Teilstrahlen (16r) des zweiten Strahlenbündels (16) nach der Wechselwirkung mit der ersten Teilerschicht (32) durch Totalreflexion zu einer vierten Reflexionsfläche (50) in Richtung des vierten Wechselwirkungspunktes (52) umlenkt.

11. Vorrichtung nach einem der Ansprüche 7 bis 10,
**dadurch gekennzeichnet, dass**
die erste Teilerschicht (32) und die zweite Teilerschicht (34) durch eine einzige durchgehende Teilerschicht gebildet werden.

12. Vorrichtung nach Anspruch 11,
**dadurch gekennzeichnet, dass**
die durchgehende Teilerschicht im Bereich der Stoßstelle zweier Tellprismen (26, 28) ausgebildet ist, die einen im Wesentlichen trapezförmigen Querschnitt aufweisen.

13. Vorrichtung nach Anspruch 7,
**dadurch gekennzeichnet, dass**
die erste Abbildungsoptik und die zweite Abbildungsoptik als ein erstes und zweites Mikroskop (6, 8) ausgebildet sind, und dass die Vorrichtung (12) zur Überlagerung des ersten und des zweiten Bildes (14, 16) in einer die beiden Mikroskope (6, 8) miteinander verbindenden Brücke (10) aufgenommen ist.

14. Vorrichtung nach Anspruch 13,
**dadurch gekennzeichnet, dass**
dieses einen mit der Brücke (10) verbundenen gemeinsamen Tubus (20) aufweist, durch weichen hindurch das erste und zweite Bild (14,16) für das menschliche Auge als zusammengeführtes Bild (18) wahmehmbar sind.

15. Vorrichtung einem der Ansprüche 13 bis 14.
**dadurch gekennzeichnet, dass**
ein weiteres Abbildungssystem (22) vorgesehen ist, mittels welchem aus der Vorrichtung (12) zur Überlagerung des ersten und des zweiten Bildes (14, 16) ein weiteres, durch Überlagerung des ersten und des zweiten Bildes (14, 16) zusammengesetztes Bild (24) zu Dokumentationszwecken auskoppelbar ist.

16. Verwendung einer Vorrichtung nach einem der Ansprüche 7 bis mit Umkehrung des Strahlengangs, indem das dritte Strahlenbündel in die Vorrichtung einläuft und in zwei farbneutrale auslaufende erste und zweite Strahlenbündel aufgespalten wird.

## Claims

1. Method for the combination of a first and second beam (14, 16), in particular in an optical instrument for the forensic examination of preparations, the first and the second beams (14, 16) being split up by reflection and transmission at a first splitter layer (32) into first and second partial beams (14r, 14t, 16r, 16t) respectively, and the resulting partial beams being superimposed at a second splitter layer (34) to form a third outgoing beam (18), **characterized**
- **in that** the number of the reflections and transmissions of the partial beams (14r, 14t) of the first beam (14) occurring at the two splitter layers (32, 34) before the combination to form the outgoing third beam (18) is equal to the number of the occurring reflections and transmissions of the partial beams (16r, 16t) of the second beam (16),
- **in that** all further reflections not taking place at one of the splitter layers (32, 34) are produced by total reflection and therefore in a colour-neutral fashion,
- **in that** the first splitter layer (32) has first and second reflective surfaces (36, 38) running opposite one another and in a fashion substantially parallel to one another, and in that the first beam (14) impinges at a first point of interaction (42) on the first reflective surface (36), and the second beam (16) impinges at a second point of interaction (44) on the second reflective surface (38),
- **in that** the first point of interaction (42) and the second point of interaction (44) are at substantially the same position on mutually opposite sides of the first splitter layer (32),
- **in that** the second splitter layer (34) has first and second reflective surfaces running opposite one another and in a fashion substantially parallel to one another, and in that the first partial beams, resulting from reflection at the first splitter layer, of the first beam impinge at a third point of interaction on the first reflective surface, and the second partial beams, resulting from reflection at the first splitter layer, of the second beam impinge at a fourth point of interaction on the second reflective surface of the second splitter layer,
- and **in that** the third point of interaction and the fourth point of interaction are substantially at the same position on mutually opposite sides of the second splitter layer.

2. Method according to Claim 1, **characterized in that** the first beam impinges on the front side of the first splitter layer, and the second beam impinges on the rear side of the first splitter layer.

3. Method according to either of Claims 1 and 2, **characterized in that** the first partial beams, resulting from reflection at the first splitter layer, of the first beam, and the second partial beams, resulting from a transmission at the first splitter layer, of the second beam are deflected by total reflection at a third reflective surface in the direction of the third point of interaction after the interaction with the first splitter layer.

4. Method according to either of Claims 1 and 2, **characterized in that** the second partial beams, resulting from transmission at the first splitter layer, of the first beam, and the first partial beams, resulting from reflection at the first splitter layer, of the second beam are deflected by total reflection at a fourth reflective surface in the direction of the fourth point of interaction after the interaction with the first splitter layer.

5. Method according to one of the preceding claims, **characterized in that** the reflectivity and transmissivity of the first splitter layer and the second splitter layer are between 45% and 55%.

6. Method according to Claim 1, **characterized in that** the first splitter layer and the second splitter layer are formed by a single, continuous splitter layer.

7. Device (12) with the aid of which a first image (14) of a first sample (2) is recorded via a first imaging optics (6), and a second image (16) of a second sample (4) is recorded via a second imaging optics (8), and can be superimposed in a common display (18), a first beam (14) emanating from the first sample (2) and a second beam (16) emanating from the second sample (4), said device having a first splitter layer (32) and a second splitter layer (34) which both split up the first and the second beams (14, 16) by transmission and reflection into first and second partial beams (14r, 14t, 16r, 16t) respectively, and which superimpose the partial beams produced to form a third outgoing beam (18), **characterized**
- **in that** the number of the reflections and transmissions of the partial beams (14r, 14t) of the first beam (14) occurring at the two splitter layers (32, 34) before the combination to form the outgoing third beam (18) is equal to the number of the occurring reflections and transmissions of the partial beams (16r, 16t) of the second beam (16),
- **in that** all further reflective surfaces which are not a component of the first splitter layer (32) or of the second splitter layer (34) are designed as totally reflective surfaces,
- **in that** the first splitter layer (32) has first and second reflective surfaces (36, 38) running opposite one another and in a fashion substantially parallel to one another, and in that the first beam (14) impinges at a first point of interaction (42) on the first reflective surface (36), and the second beam impinges at a second point of interaction (44) on the second reflective surface (38),
- **in that** the first point of interaction (42) and the second point of interaction (44) are at substantially the same position on mutually opposite sides of the first splitter layer (32),
- **in that** the second splitter layer (34) has first and second reflective surfaces running opposite one another and in a fashion substantially parallel to one another, and in that the first partial beams, resulting from reflection at the first splitter layer, of the first beam impinge at a third point of interaction on the first reflective surface, and the second partial beams, resulting from reflection at the first splitter layer, of the second beam impinge at a fourth point of interaction on the second reflective surface of the second splitter layer,
- and **in that** the third point of interaction and the fourth point of interaction are substantially at the same position on mutually opposite sides of the second splitter layer.

8. Device according to Claim 7, **characterized in that** the second splitter layer (34) has first and second reflective surfaces (36, 38) running opposite one another and in a fashion substantially parallel to one another, and **in that** the first partial beams (14r), resulting from reflection at the first splitter layer, of the first beam (14) impinge at a third point of interaction (49) on the first reflective surface (36), and the second partial beams (16r), resulting from reflection at the first splitter layer, of the second beam (16) impinge at a fourth point of interaction (52) on the second reflective surface (38) of the second splitter layer (34).

9. Device according to Claim 8, **characterized in that** a totally reflecting surface is provided which, after the interaction with the first splitter layer (32) deflects the first partial beams (14r), resulting from reflection at the first splitter layer, of the first beam (14) and the second partial beams (16t), resulting from a transmission at the first splitter layer, of the second beam (16) by means of total reflection to a third reflective surface (48) in the direction of the third point of interaction (49).

10. Device according to either of Claims 7 and 8, **characterized in that** a totally reflecting interface is provided which, after the interaction with the first splitter layer (32) deflects the second partial beams (14t), resulting from transmission at the first splitter layer, of the first beam (14) and the first partial beams (16r), resulting from reflection, of the second beam (16) by means of total reflection to a fourth reflective surface (50) in the direction of the fourth point of interaction (52).

11. Device according to one of Claims 7 to 10, **characterized in that** the first splitter layer (32) and the second splitter layer (34) are formed by a single, continuous splitter layer.

12. Device according to Claim 11, **characterized in that** the continuous splitter layer is formed in the region of the joint of two subprisms (26, 28), which have a substantially trapezoidal cross section.

13. Device according to Claim 7, **characterized in that** the first imaging optics and the second imaging optics are designed as a first and second microscope (6, 8), and **in that** the device (12) for superimposing the first and the second image (14, 16) is held in a bridge (10) connecting the two microscopes (6, 8) to one another.

14. Device according to Claim 13, **characterized in that** said device has a common tube (20) which is connected to the bridge (10) and through which the first and second image (14, 16) are perceptible to the human eye as a combined image (18).

15. Device according to either of Claims 13 and 14, **characterized in that** a further imaging system (22) is provided by means of which it is possible for documentation purposes to decouple from the device (12) for superimposing the first and the second image (14, 16) a further image (24) assembled by superimposing the first and the second image (14, 16).

16. Use of a device according to one of Claims 7 to with reversal of the beam path by virtue of the fact that the third beam enters the device and is split up into two colour-neutral outgoing first and second beams.

## Revendications

1. Procédé pour concentrer un premier et un deuxième faisceau de rayons (14, 16), notamment dans un instrument optique pour l'examen légal de préparations, la premier et le deuxième faisceau de rayons (14, 16) étant divisés à chaque fois en premiers et en deuxièmes rayons partiels (14r, 14t, 16r, 16t) par réflexion et transmission au niveau d'une première (32) couche de division et les rayons partiels obtenus étant superposés au niveau d'une deuxième couche de division (34) pour former un troisième faisceau de rayons (18) sortant, **caractérisé en ce**
- **que** le nombre de réflexions et de transmissions des rayons partiels (14r, 14t) du premier faisceau de rayons (14) effectuées au niveau des deux couches de division (32, 34) avant le regroupement en le troisième faisceau de rayons (18) sortant est égal au nombre de réflexions et de transmissions effectuées des rayons partiels (16r, 16t) du deuxième faisceau de rayons (16),
- **que** toutes les autres réflexions qui n'ont pas lieu au niveau de l'une des couches de division (32, 34) sont produites par réflexion totale et ainsi chromatiquement neutres,
- **que** la première couche de division (32) présente une première et une deuxième surface de réflexion (36, 38) opposées l'une à l'autre et s'étendant pour l'essentiel parallèlement l'une à l'autre et que le premier faisceau de rayons (14) vient heurter un premier point d'interaction (42) sur la première surface de réflexion (36) et le deuxième faisceau de rayons (16) vient heurter un deuxième point d'interaction (44) sur la deuxième surface de réflexion (38),
- **que** le premier point d'interaction (42) et le deuxième point d'interaction (44) se trouvent pour l'essentiel à la même position sur les côtés opposés l'un à l'autre de la première couche de division (32),
- **que** la deuxième couche de division (34) présente une première et une deuxième surface de réflexion opposées l'une à l'autre et s'étendant pour l'essentiel parallèlement l'une à l'autre et que les premiers rayons partiels du premier faisceau de rayons produits par réflexion au niveau de la première couche de division viennent heurter un troisième point d'interaction sur la première surface de réflexion et les deuxièmes rayons partiels du deuxième faisceau de rayons produits par réflexion au niveau de la première couche de division viennent heurter un quatrième point d'interaction sur la deuxième surface de réflexion de la deuxième couche de division,
- et **que** le troisième point d'interaction et le quatrième point d'interaction se trouvent pour l'essentiel à la même position sur les côtés opposés l'un à l'autre de la deuxième couche de division.

2. Procédé selon la revendication 1, **caractérisé en ce que** le premier faisceau de rayons vient heurter la face avant de la première couche de division et le deuxième faisceau de rayons vient heurter la face arrière de la première couche de division.

3. Procédé selon l'une des revendications 1 ou 2, **caractérisé en ce que** les premiers rayons partiels du premier faisceau de rayons produits par réflexion au niveau de la première couche de division et les deuxièmes rayons partiels du deuxième faisceau de rayons produits par transmission au niveau de la première couche de division sont déviés en direction du troisième point d'interaction par réflexion totale au niveau d'une troisième surface de réflexion après interaction avec la première couche de division.

4. Procédé selon l'une des revendications 1 ou 2, **caractérisé en ce que** les deuxièmes rayons partiels du premier faisceau de rayons produits par transmission au niveau de la première couche de division et les premiers rayons partiels du deuxième faisceau de rayons produits par réflexion au niveau de la première couche de division sont déviés en direction du quatrième point d'interaction par réflexion totale au niveau d'une quatrième surface de réflexion après interaction avec la première couche de division.

5. Procédé selon l'une des revendications précédentes, **caractérisé en ce que** la capacité de réflexion et la capacité de transmission de la première couche de division et de la deuxième couche de division est comprise entre 45 % et 55 %.

6. Procédé selon la revendication 1, **caractérisé en ce que** la première couche de division et la deuxième couche de division sont formées par une couche de division transparente unique.

7. Dispositif (12) avec lequel une première image (14) d'un premier échantillon (2) est enregistrée par le biais d'une première optique de reproduction (6) et une deuxième image (16) d'un deuxième échantillon (4) est enregistrée par le biais d'une deuxième optique de reproduction (8) et peuvent être superposées en une représentation commune (18), un premier faisceau de rayons (14) sortant du premier échantillon (2) et un deuxième faisceau de rayons (16) sortant du deuxième échantillon (4), comprenant une première couche de division (32) et une deuxième couche de division (34) qui divisent toutes deux le premier et le deuxième faisceau de rayons (14, 16) par transmission et par réflexion respectivement en premiers et deuxièmes rayons partiels (14r, 14t, 16r, 16t) et qui superposent les rayons partiels produits pour former un troisième faisceau de rayons (18) sortant, **caractérisé en ce**
- **que** le nombre de réflexions et de transmissions des rayons partiels (14r, 14t) du premier faisceau de rayons (14) effectuées au niveau des deux couches de division (32, 34) avant le regroupement en le troisième faisceau de rayons (18) sortant est égal au nombre de réflexions et de transmissions effectuées des rayons partiels (16r, 16t) du deuxième faisceau de rayons (16),
- **que** toutes les autres surfaces de réflexion qui ne font pas partie de la première couche de division (32) ou de la deuxième couche de division (34) sont réalisées sous la forme de surfaces à réflexion totale,
- **que** la première couche de division (32) présente une première et une deuxième surface de réflexion (36, 38) opposées l'une à l'autre et s'étendant pour l'essentiel parallèlement l'une à l'autre et que le premier faisceau de rayons (14) vient heurter un premier point d'interaction (42) sur la première surface de réflexion (36) et le deuxième faisceau de rayons (16) vient heurter un deuxième point d'interaction (44) sur la deuxième surface de réflexion (38),
- **que** le premier point d'interaction (42) et le deuxième point d'interaction (44) se trouvent pour l'essentiel à la même position sur les côtés opposés l'un à l'autre de la première couche de division (32),
- **que** la deuxième couche de division (34) présente une première et une deuxième surface de réflexion opposées l'une à l'autre et s'étendant pour l'essentiel parallèlement l'une à l'autre et que les premiers rayons partiels du premier faisceau de rayons produits par réflexion au niveau de la première couche de division viennent heurter un troisième point d'interaction sur la première surface de réflexion et les deuxièmes rayons partiels du deuxième faisceau de rayons produits par réflexion au niveau de la première couche de division viennent heurter un quatrième point d'interaction sur la deuxième surface de réflexion de la deuxième couche de division,
- et **que** le troisième point d'interaction et le quatrième point d'interaction se trouvent pour l'essentiel à la même position sur les côtés opposés l'un à l'autre de la deuxième couche de division.

8. Dispositif selon la revendication 7, **caractérisé en ce que** la deuxième couche de division (34) présente une première et une deuxième surface de réflexion (36, 38) opposées l'une à l'autre et s'étendant pour l'essentiel parallèlement l'une à l'autre et que les premiers rayons partiels (14r) du premier faisceau de rayons (14) produits par réflexion au niveau de la première couche de division viennent heurter un troisième point d'interaction (49) sur la première surface de réflexion (36) et les deuxièmes rayons partiels (16r) du deuxième faisceau de rayons (16) produits par réflexion au niveau de la première couche de division viennent heurter un quatrième point d'interaction (52) sur la deuxième surface de réflexion (38) de la deuxième couche de division (34).

9. Dispositif selon la revendication 8, **caractérisé en ce qu'**il est prévu une surface à réflexion totale qui dévie les premiers rayons partiels (14r) du premier faisceau de rayons (14) produits par réflexion au niveau de la première couche de division et les deuxièmes rayons partiels (16t) du deuxième faisceau de rayons (16) produits par transmission au niveau de la première couche de division par réflexion totale vers une troisième surface de réflexion (48) en direction du troisième point d'interaction (49) après interaction avec la première couche de division (32).

10. Dispositif selon l'une des revendications 7 ou 8, **caractérisé en ce qu'**il est prévu une surface de délimitation à réflexion totale qui dévie les deuxièmes rayons partiels (14t) du premier faisceau de rayons (14) produits par transmission au niveau de la première couche de division et les premiers rayons partiels (16r) du deuxième faisceau de rayons (16) produits par réflexion vers une quatrième surface de réflexion (50) en direction du quatrième point d'interaction (52) par réflexion totale après interaction avec la première couche de division (32).

11. Dispositif selon l'une des revendications 7 à 10, **caractérisé en ce que** la première couche de division (32) et la deuxième couche de division (34) sont formées par une couche de division transparente unique.

12. Dispositif selon la revendication 11, **caractérisé en ce que** la couche de division transparente est formée dans la zone du joint de deux prismes partiels (26, 28) qui présentent une section transversale essentiellement trapézoïdale.

13. Dispositif selon la revendication 7, **caractérisé en ce que** la première optique de reproduction et la deuxième optique de reproduction sont réalisées sous la forme d'un premier et d'un deuxième microscope (6, 8) et que le dispositif (12) de superposition de la première et de la deuxième image (14, 16) est logé dans un pont (10) reliant ensemble les deux microscopes (6, 8).

14. Dispositif selon la revendication 13, **caractérisé en ce que** celui-ci présente un tube (20) commun relié avec le pont (10) à travers lequel la première et la deuxième image (14, 16) peuvent être perçues par l'oeil humain sous la forme d'une image assemblée (18).

15. Dispositif selon l'une des revendications 13 à 14, **caractérisé en ce qu'**il est prévu un système de reproduction supplémentaire (22) au moyen duquel, à partir du dispositif (12) de superposition de la première et de la deuxième image (14, 16), peut être découplée une image supplémentaire (24) composée en superposant la première et la deuxième image (14, 16) à des fins de documentation.

16. Utilisation d'un dispositif selon l'une des revendications 7 à , avec déviation du trajet des rayons en ce que le troisième faisceau de rayons pénètre dans le dispositif et est fractionné en deux faisceaux de rayons sortants chromatiquement neutres, un premier et un deuxième.
